# EUROPÄISCHE PATENTSCHRIFT

(11) **EP 0 799 681 B1**
(45) Veröffentlichungstag und Bekanntmachung des Hinweises auf die Patenterteilung: **04.07.2001**
(21) Anmeldenummer: 96810209.5
(22) Anmeldetag: 03.04.1996
(51) Int. Cl.: B29C 37/00, B29C 70/68

(54) **Herstellung eines dekorierten Formkörpers aus Kunststoff**
Manufacturing of decorated moulded articles made of plastics
Fabrication d'articles en matière plastique moulés et décorés

(43) Veröffentlichungstag der Anmeldung: 08.10.1997
(73) Patentinhaber: Vantico AG, 4057 Basel (CH)
(72) Erfinder: Lucchi, Marco, CH-4213 Allschwil (CH); Saner, Niklaus, CH-4423 Hersberg (CH); Gruber, Urs, CH-4144 Arlesheim (CH); Wombwell, Paul Terrence, Melbourn, Royston Hertfordshire (GB)
(74) Vertreter: Zumstein, Fritz, Dr.

(56) Entgegenhaltungen:
- EP-A- 0 148 611
- EP-A- 0 346 474
- EP-A- 0 437 395
- EP-A- 0 604 819
- GB-A- 2 236 982
- US-A- 2 760 899
- US-A- 3 379 592

## Beschreibung

Die Erfindung bezieht sich auf die Herstellung eines dekorierten Formkörpers aus Kunststoff im Giessverfahren gemäß dem Oberbegriff des Anspruchs 1.

Das sogenannte Automatische Druckgelierverfahren (ADG, engl. APG) zur Herstellung von Giesslingen aus wärmehärtbaren Kunstharzsystemen ist weltweit bekannt und verbreitet. Dabei wird das aushärtbare Harzsystem unter Druck in eine erwärmte Giessform eingebracht und mittels einer speziellen Temperaturführung dafür gesorgt, dass das von aussen zugeführte Harzsystem in Kontakt mit dem noch nicht gelierten Harzsystem in der Giessform bleibt, um den Reaktionsschwund zu kompensieren und einen lunkerfreien Giessling zu erhalten. Dieses Automatische Druckgelierverfahren und verschiedene Anwendungen desselben sind in zahlreichen Publikationen, beispielsweise etwa der EP-A-0 333 456 und der US-A-5 064 585, im Detail beschrieben. Eine besonders zweckmässige Variante ist Gegenstand der WO 96/27487 mit der Priorität der UK-Patentanmeldung Nr. 9504564.7 vom 07. März 1995. Für das Automatische Druckgelierverfahren besonders geeignete wärmehärtbare Kunstharzsysteme sind in EP-A-0 333 456, EP-A-0 599 600 und EP-A-0 604 089 beschrieben.

Für viele Anwendungen ist es erforderlich oder zumindest erwünscht, dass die Formkörper mit einem ein- oder mehrfarbigen Dekor versehen sind. Eine häufig angewandte Möglichkeit zur Aufbringung eines solchen Dekors besteht im sogenannten Thermotransferverfahren. Bei diesem ist das Dekor mittels sogenannter Sublimationsfarbstoffe auf einer Transferfolie - üblicherweise Papier - aufgedruckt. Diese Transferfolie wird mit der zu dekorierenden Oberfläche des Formkörpers in Kontakt gebracht, und das Dekor wird dabei unter Druck und Wärme durch Sublimation von der Transferfolie auf die Oberfläche des Formkörpers übertragen. Näheres über das Thermotransferverfahren sowie über eine beispielsweise Anwendungsmöglichkeit ist u.a. in der US-A-4 406 662 beschrieben.

Gemäss dem üblichen Vorgehen erfolgt das Aufbringen des Dekors auf z.B. im Automatischen Druckgelierverfahren hergestellte Formkörper aus wärmehärtbaren Kunstharzsystemen - im folgenden einfach Formkörper oder Giesslinge genannt - in einem separaten Schritt nach der Aushärtung des Formkörpers. Und zwar wird dazu der (auf Raumtemperatur befindliche) Formkörper wieder auf die für den Thermotransferdruck erforderliche Temperatur (üblicherweise im Bereich um 220 °C) aufgeheizt und mittels separater Formwerkzeuge mit der Transferfolie in Kontakt gebracht. Abgesehen vom apparativen Aufwand für separate Formwerkzeuge lassen sich auf diese Weise jedoch insbesondere hinsichtlich ihrer Haltbarkeit nur relativ unbefriedigende Dekors erzeugen, was vor allem darin begründet ist, dass die Sublimationsfarbstoffe nur sehr wenig in die Oberfläche des Formkörpers eindringen. Ein weiterer Nachteil bei dieser Vorgehensweise besteht darin, dass durch das neuerliche Erwärmen des Formkörpers in diesem thermische Spannungen erzeugt werden, welche insbesondere bei grösseren und dünnwandigen Formkörpern zu Verformungen führen können. Ausserdem ist die beschriebene bekannte Vorgehensweise nicht sehr rationell.

Die US-A-3 379 592 offenbart ein Verfahren, bei dem auf einem nur teilweise ausgehärteten Vorformling eine Folie mit thermohärtbarem Farbstoff aufgelegt und dann dieser Verbund vollständig ausgehärtet wird. Der thermohärtbare Farbstoff und der Formkörper härten dabei gleichzeitig aus. Hierbei handelt es sich um ein Aufdrucken des Farbstoffs auf der Oberfläche des Formkörpers, weswegen nach der Fertigstellung eine Schutzschicht aufgesprüht wird, damit das aufgedruckte Motiv während des täglichen Gebrauchs gegen Abrieb geschützt ist.

Durch die vorliegende Erfindung sollen nun die Herstellung von dekorierten Formkörpern aus wärmehärtbaren Kunstharzsystemen rationalisiert und dahingehend verbessert werden, dass die genannten Schwierigkeiten und Nachteile vermieden werden.

Das dieser Aufgabenstellung gerecht werdende Verfahren ist erfindungsgemäss dadurch gekennzeichnet, dass die Übertragung des Dekors nach der Gelierung und vor dem endgültigen Aushärten des Kunstharzsystems in noch warmem Zustand des Giesslings durchgeführt wird.

Vorzugsweise erfolgt dies direkt in der Giessform, kann aber auch in einem separaten Formwerkzeug durchgeführt werden.

Besonders zweckmässigerweise wird dabei so vorgegangen, dass nach der Gelierung des Kunstharzsystems die noch warme Giessform zumindest teilweise geöffnet, eine mit einem Dekor versehene Transferfolie in die Giessform eingelegt und die Giessform für mindestens die zur Durchführung der Dekorübertragung erforderliche Zeit, insbesondere etwa 1-3 Minuten, wieder geschlossen wird.

Dabei erfolgt die Übertragung des Dekors vorteilhafterweise bei einer Temperatur von 120 - 220 °C, insbesondere bei einer Temperatur von 140 - 170 °C, speziell 150 - 160 °C.

Als wärmehärtbares Kunstharzsystem wird vorzugsweise ein Epoxidharzsystem, insbesondere ein cycloaliphatisches System oder ein System auf Bisphenol-A-, Bisphenol-F- oder Epoxinovolak-Basis verwendet. Ganz besonders bevorzugt wird als wärmehärtbares Kunstharzsystem ein Epoxidharzsystem mit einem Anhydrid-, Amin- oder Dicyandiamid-Härter verwendet.

Durch das erfindungsgemässe Übertragen des Dekors direkt in der Giessform entfällt ein separates Formwerkzeug für den Thermotransferdruck sowie das Wiedererwärmen des Formkörpers. Ferner werden thermische Spannungen vermieden und, ganz besonders wichtig, es wird eine deutlich verbesserte Eindringtiefe der Sublimationsfarbstoffe erzielt, wodurch sich die Haltbarkeit des Dekors wesentlich erhöht.

Weitere Einzelheiten und Vorteile der Erfindung ergeben sich aus der nachstehenden Beschreibung in Verbindung mit der Zeichnung, welche den Ablauf des erfindungsgemässen Verfahrens schematisch visualisiert. In der Zeichnung zeigen:
- Fig. 1: einen Vertikalschnitt durch eine Giessform vor dem Einbringen des Harzsystems,
- Fig. 2: einen Schnitt analog Fig. 1 nach dem Einbringen des Harzsystems,
- Fig. 3: die Giessform der Fig. 1 in geöffnetem Zustand mit dem darin befindlichen gelierten Giessling und einer eingelegten Transferfolie,
- Fig. 4: die Giessform in geschlossenem Zustand nach dem Einlegen der Transferfolie im Schnitt analog Fig. 1 und
- Fig. 5: den fertigen, entformten und dekorierten Formkörper im Schnitt analog Fig. 1.

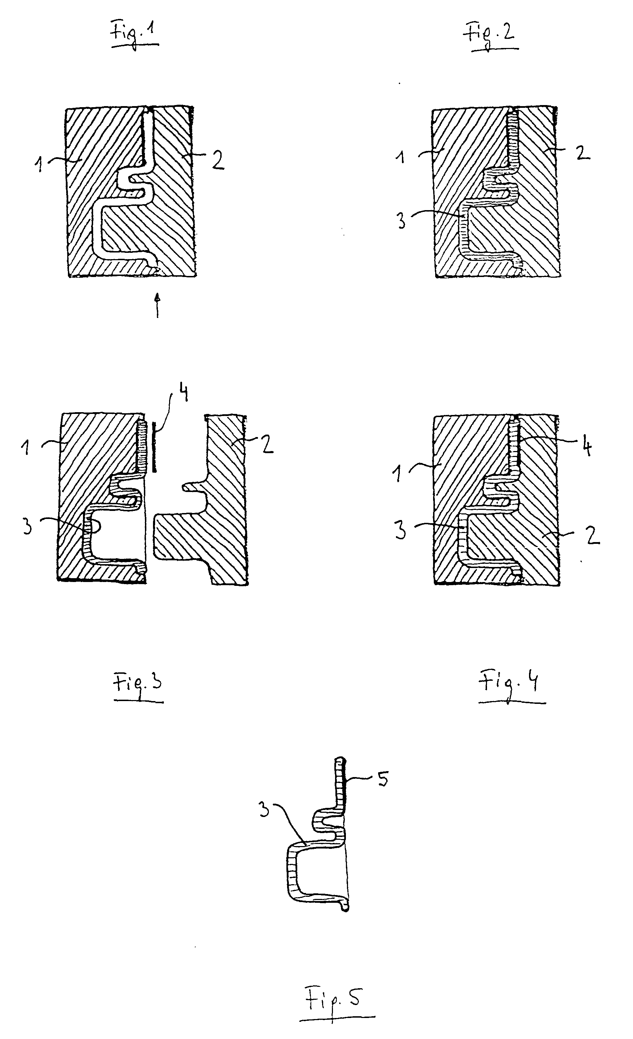

Die wesentlichsten Abläufe des erfindungsgemässen Verfahrens sind in den Figuren 1-5 am Beispiel der Herstellung eines Spülbeckens dargestellt. In einem ersten Schritt wird ein wärmehärtbares Kunstharzsystem in eine geschlossenen vorgewärmte, hier zweiteilige Giessform 1,2 unter leichtem Überdruck eingefüllt und zur Gelierung gebracht (Figuren 1 und 2). Der dabei erzeugte, sich noch im Gel-Zustand befindliche Giessling bzw. Formkörper ist mit 3 bezeichnet. Die erste Phase erfolgt hier exakt nach dem erwähnten Automatischen Druckgelierverfahren wie es beispielsweise in der zitierten EP-A-0 333 456 oder der WO 96/27487 im Detail beschrieben ist. Eine nähere Erläuterung erübrigt sich daher.

In einem zweiten Schritt wird die Giessform 1,2 geöffnet, und es wird eine Transferfolie 4 mit dem gewünschten aufgedruckten Dekor auf diejenigen Oberflächenbereiche des Giesslings 3 aufgelegt, welche ein Dekor erhalten sollen. Im Beispiel ist dies der relativ flache Ablagebereich des Spülbeckens (Fig. 3). Die Transferfolie 4 kann alternativ auch in die entsprechenden Bereiche der Giessform eingelegt werden.

In einem nächsten Schritt wird die Giessform wieder geschlossen, wobei die Transferfolie 4 in innigen Kontakt mit dem Giessling kommt und aufgrund des Schliessdrucks und der Temperatur der Giessform und des Giesslings die Übertragung des Dekors von der Transferfolie 4 auf den Giessling 3 erfolgt (Fig. 4).

Nach Beendigung des Übertragungsvorgangs, welcher in der Regel nur wenige Minuten dauert, wird in einem weiteren Schritt die Giessform 1,2 geöffnet und der mit dem Dekor 5 versehene Giessling 3 sowie die Transferfolie 4 entnommen (Fig. 5).

In einem letzten Schritt erfolgt dann schliesslich in der z.B. vom Automatischen Druckgelierverfahren bekannten Weise die fertige Aushärtung des Giesslings in einem Ofen.

Die zur Verwendung gelangenden wärmehärtbaren Kunstharzsysteme richten sich nach den gewünschten Eigenschaften des herzustellenden Formkörpers. Besonders geeignet sind die beim Automatischen Druckgelierverfahren üblicherweise eingesetzten Kunstharzsysteme, speziell Epoxidharzsysteme. Besonders zweckmässig sind dabei cycloaliphatische Systeme oder Systeme auf Bisphenol-A-, Bisphenol-F- oder Epoxinovolak-Basis, wobei insbesondere Anhydrid-, Amin- oder Dicyandiamid-Härter verwendet werden.

Als Farbstoffe, mit denen das Dekor auf die Transferfolie (üblicherweise Papier) aufgedruckt wird, kommen alle handelsüblichen Sublimationsfarbstoffe in Betracht. Besonders geeignet sind die unter den Markenbezeichnungen Teraprint® und Terasil® von der Anmelderin vertriebenen Sublimationsfarbstoffe.

Die Temperatur des Kunstharzsystems beim Einfüllen in die Giessform und die Temperatur der Giessform sowie ggf. die zeitliche und örtliche Temperaturführung bzw. -verteilung in der Giessform richten sich nach der Art des Kunstharzsystems und sind der einschlägigen Literatur über das Automatische Druckgelierverfahren, beispielsweise auch den eingangs schon genannten Druckschriften zu entnehmen. Typische Werte für die Temperatur der Giessform während der Gelierphase sind 150-170 °C.

Für ein Kunstharzsystems des Typs Araldite 5100-1 (Harz) / Araldite 5100-2 (Härter) der Anmelderin beträgt die Einfülltemperatur des Harzsystems typisch etwa 50 - 70 °C und die Temperatur der Giessform, hier im Falle der Herstellung eines Spülbeckens, über die gesamte Höhe typisch etwa 150 - 170 °C. Die Giesszeit (Einfüllzeit) beträgt typisch etwa 1 - 1,5 Minuten bei einem Giessdruck von etwa 0,8 bar. Die Schliesszeit bis zur Gelierung des Giesslings beträgt etwa 10 - 12 Minuten, wobei ein Überdruck von etwa 0,8 bar aufrechterhalten wird. Nach der Ausformung beträgt die Aushärtezeit typisch etwa 2 Stunden bei einer Temperatur von etwa 135 °C.

Die Temperatur des Giesslings und der Giessform während der Übertragung des Dekors von der Transferfolie auf die Giesslingoberfläche richtet sich nach den zur Verwendung gelangenden Sublimationsfarbstoffen und natürlich auch nach den eingesetzten Kunstharzsystemen. Dasselbe gilt auch für die Schliessdauer der Giessform während des Übertragungsvorgangs und für den dabei zur Anwendung gelangenden Schliessdruck. Versuche haben gezeigt, dass dabei in der Regel mit wesentlich niedrigeren Temperaturen gearbeitet werden kann, als von den Herstellern der Sublimationsfarbstoffe üblicherweise empfohlen werden. Typische Werte sind 140-170 °C im Unterschied zu den empfohlenen Richtwerten um 210-220 °C. Manche Sublimationsfarbstoffe benötigen auch höhere Temperaturen im Bereich der genannten Richtwerte. Geeignete Schliesszeiten während des Übertragungsvorgangs sind einige Minuten, typisch etwa 1-3 Minuten, bei einem Formschliessdruck von etwa 2-4 bar, was dem normalen Formschliessdruck während des Giessvorgangs entspricht.

Wie schon eingangs erwähnt, kann der Übertragungsvorgang auch in einem separaten Formwerkzeug erfolgen, so dass die Giessform nicht so lange belegt ist und sofort wieder für den nächsten Zyklus verwendet werden kann. In diesem Falle wird der noch heisse Giessling aus der Giessform entnommen und in das separate Formwerkzeug eingelegt. Alle anderen Schritte sind gleich wie oben beschrieben. Das Formwerkzeug kann für diesen Zweck u. U. auch aus einer relativ starren Stützhälfte und einer flexiblen Anpresshälfte bestehen, die sich nach Art eines Stempelkissens oder dgl. an die Oberfläche des Giesslings anschmiegt und die Transferfolie mit dieser in Kontakt hält. Das Formwerkzeug kann auf diese Weise relativ kostengünstig ausgebildet sein.

Durch die erfindungsgemässe Übertragung des Dekors auf den noch im Gel-Zustand befindlichen Giessling in der Giessform wird überraschend eine deutliche Verbesserung der Eindringtiefe der Sublimationsfarbstoffe erreicht, was zu einer wesentlichen Verbesserung der Haltbarkeit des Dekors führt. Die nachstehende Tabelle stellt die unter verschiedenen Bedingungen und mit verschiedenen Sublimationsfarbstoffen erzielten Eindringtiefen einander gegenüber. In Zeile 1 sind die Zeitdauern und die Temperaturen des Übertragungsvorgangs angegeben. Die Spalten 2-4 beziehen sich auf nach dem erfindungsgemässen Verfahren hergestellte Formkörper, die Spalten 5-8 auf herkömmlich hergestellte Formkörper, wobei das Dekor im konventionellen Transferdruckverfahren auf den fertig ausgehärteten Formkörper aufgebracht wird. Alle Farbstoffangaben beziehen sich auf Sublimationsfarbstoffe der Marke Teraprint® der Anmelderin. Die Messung der Eindringtiefe erfolgt in einem Werkstückschnitt visuell mittels eines mit einer Strich-Skala (0,1 mm Teilung) versehenen Vergrösserungsglases (Vergrösserungsfaktor 10). Fragezeichen (?) anstelle von Messwerten bedeuten sehr geringe, mit dieser Messmethode quantitativ nicht erfassbare Eindringtiefen. Die Tabelle zeigt deutlich die Überlegenheit des erfindungsgemässen Verfahrens insbesondere bei Temperaturen um 150 °C und Übertragungszeiten um 3 Minuten.

**Tabelle**

| **Eindringtiefen (mm)** | | | | | | |
|---|---|---|---|---|---|---|
| | erfindungsgemäss | | | konventionell | | |
| Teraprint® | geliert 1' 150 C | geliert 2' 150 C | geliert 3' 150 C | ausgeh. 2' 150 C | ausgeh. 3' 150 C | ausgeh. 30'' 210 C |
| yellow 2G | | | | 0,01 | ? | ? |
| yellow G | 0,05 | 0,02 | 0,05 | 0,02 | ? | ? |
| orange 2R | | | | 0,02 | 0,02 | sehr gering |
| red 3G | 0,02 | 0,05 | 0,08 | 0,03 | 0,04 | 0,03 |
| red 6B | gering | 0,04 | 0,05 | 0,02 | 0,03 | 0,03 |
| blue 6R | ? | 0,03 | 0,03 | ? | 0,01 | 0,02 |
| blue 5R | | | | ? | ? | ? |
| blue 2G | gering | 0,03 | 0,05 | ? | ? | 0,02 |
| turquoise G | | | | ? | ? | ? |
| black B | | | | ? | ? | ? |
| black D | ? | 0,03 | 0,02 | ? | ? | ? |

## Patentansprüche

1. Verfahren zur Herstellung eines mit einem Dekor (5) versehenen Formkörpers aus einem wärmehärtbaren Kunstharzsystem, wobei letzteres in eine vorgewärmte Giessform (1, 2) eingebracht und unter Überdruck zur Gelierung gebracht wird, der so gebildete Giessling (3) auf wenigstens einem Teilbereich seiner Oberfläche im Thermotransferverfahren mit einem Dekor (5) versehen wird, wobei das auf einer Transferfolie (4) in Form von Sublimationsfarbstoffen vorhandene Dekor (5) unter Anwendung von Wärme und Druck von der Transferfolie (4) auf die Oberfläche des Giesslings (3) übertragen wird, dadurch gekennzeichnet, dass die Übertragung des Dekors (5) nach der Gelierung und vor dem endgültigen Aushärten des Kunstharzsystems in noch warmem Zustand des Giesslings (3) durchgeführt wird.

2. Verfahren nach Anspruch 1, dadurch gekennzeichnet, dass die Übertragung des Dekors (5) direkt in der Giessform (1,2) durchgeführt wird.

3. Verfahren nach Anspruch 1, dadurch gekennzeichnet, dass die Übertragung des Dekors (5) in einem separaten Formwerkzeug durchgeführt wird.

4. Verfahren nach Anspruch 2, dadurch gekennzeichnet, dass nach der Gelierung des Kunstharzsystems die noch warme Giessform (1,2) zumindest teilweise geöffnet, eine mit einem Dekor (5) versehene Transferfolie (4) in die Giessform (1,2) eingelegt und die Giessform (1,2) für mindestens die zur Durchführung der Dekorübertragung erforderliche Zeit, insbesondere etwa 1-3 Minuten, wieder geschlossen wird.

5. Verfahren nach einem der vorangehenden Ansprüche, dadurch gekennzeichnet, dass die Übertragung des Dekors (5) bei einer Temperatur von 120 - 220 °C, insbesondere bei einer Temperatur von 140 - 160 °C erfolgt.

6. Verfahren nach einem der vorangehenden Ansprüche, dadurch gekennzeichnet, dass als wärmehärtbares Kunstharzsystem ein Epoxidharzsystem, insbesondere ein cycloaliphatisches System oder ein System auf Bisphenol-A-, Bisphenol-F- oder Epoxinovolak-Basis verwendet wird.

7. Verfahren nach einem der vorangehenden Ansprüche, dadurch gekennzeichnet, dass als wärmehärtbares Kunstharzsystem ein Epoxidharzsystem mit einem Anhydrid-, Amin- oder Dicyandiamid-Härter verwendet wird.

## Claims

1. A process for the manufacture of a moulding from a thermocurable synthetic resin system and provided with a decoration (5), in which process the synthetic resin system is introduced into a preheated casting mould (1,2) and caused to gel under excess pressure and the casting (3) so formed is provided with a decoration (5) over at least a partial region of its surface in a thermotransfer process, the decoration (5), which is present on a transfer sheet (4) in the form of sublimation dyes, being transferred from the transfer sheet (4) to the surface of the casting (3) with the application of heat and pressure, which process comprises transferring the decoration (5) after the synthetic resin system has gelled and before final full cure, while the casting (3) is still in the warm state.

2. A process according to claim 1, which comprises transferring the decoration (5) directly in the casting mould (1,2).

3. A process according to claim 1, which comprises transferring the decoration (5) in a separate moulding tool.

4. A process according to claim 2, which comprises opening at least partially the still-warm casting mould (1,2) after the synthetic resin system has gelled, inserting into the casting mould (1,2) a transfer sheet (4) carrying a decoration (5) and closing the casting mould (1,2) again for at least the time necessary for the transfer of the decoration to take place, especially for approximately from 1 to 3 minutes.

5. A process according to any one of the preceding claims, which comprises transferring the decoration (5) at a temperature of from 120 to 220°C, especially at a temperature of from 140 to 160°C.

6. A process according to any one of the preceding claims, which comprises using as thermocurable synthetic resin system an epoxy resin system, especially a cycloaliphatic system or a system based on bisphenol A, bisphenol F or epoxy novolak.

7. A process according to any one of the preceding claims, which comprises using as thermocurable synthetic resin system an epoxy resin system with an anhydride, amine or dicyandiamide hardener.

## Revendications

1. Procédé pour la fabrication d'un article muni d'un décor (5), moulé à partir d'un système de résine synthétique thermodurcissable, dans lequel ce dernier est introduit dans un moule préchauffé (1,2) et est amené à la gélification sous pression, l'article moulé ainsi formé (3) est muni d'un décor (5) sur au moins une partie de sa surface par le procédé de transfert thermique, le décor (5) présent sur une feuille de transfert (4) sous la forme de colorants de sublimation est transféré de la feuille de transfert (4) sur la surface de l'article moulé (3) sous l'action de la chaleur et de la pression, caractérisé en ce que, le transfert du décor (5) est réalisé après la gélification et avant le durcissement final du système de résine synthétique à l'état encore chaud de l'article moulé (3).

2. Procédé selon la revendication 1, caractérisé en ce que le transfert du décor (5) est réalisé directement dans le moule (1,2).

3. Procédé selon la revendication 1, caractérisé en ce que le transfert du décor (5) est réalisé dans un moule séparé.

4. Procédé selon la revendication 2, caractérisé en ce qu'on ouvre au moins partiellement le moule (1,2) encore chaud après la gélification du système de résine synthétique, on introduit dans le moule (1,2) une feuille de transfert (4) munie d'un décor (5) et on referme le moule (1,2) pendant au moins le temps nécessaire à la réalisation du transfert du décor, en particulier pendant 1 à 3 minutes environ.

5. Procédé selon l'une des revendications précédentes, caractérisé en ce que l'on réalise le transfert du décor (5) à une température de 120 à 220°C, en particulier à une température de 140 à 160°C.

6. Procédé selon l'une des revendications précédentes, caractérisé en ce qu'on utilise comme système de résine synthétique thermodurcissable un système de résine époxyde, en particulier un système cycloaliphatique ou un système à base de bisphénol A, de bisphénol F ou d'époxynovolaque.

7. Procédé selon l'une des revendications précédentes, caractérisé en ce qu'on utilise comme système de résine synthétique thermodurcissable un système de résine époxyde avec un durcisseur anhydride, amine ou dicyandiamide.
